(19) Europäisches Patentamt
European Patent Office
Office européen des brevets

(11) Publication number: **0 506 168 A1**

# (12) EUROPEAN PATENT APPLICATION

(21) Application number: **92200706.7**

(51) Int. Cl.[5]: **C08G 67/02**

(22) Date of filing: **11.03.92**

(30) Priority: **21.03.91 NL 9100503**

(43) Date of publication of application:
**30.09.92 Bulletin 92/40**

(84) Designated Contracting States:
**BE DE ES FR GB IT NL PT**

(71) Applicant: **SHELL INTERNATIONALE RESEARCH MAATSCHAPPIJ B.V.**
**Carel van Bylandtlaan 30**
**NL-2596 HR Den Haag(NL)**

(72) Inventor: **Keijsper, Johannes Jacobus**
**Badhuisweg 3**
**NL-1031 CM Amsterdam(NL)**

## (54) Catalyst compositions.

(57) Novel catalyst compositions comprising a catalyst suitable for the preparation of linear alternating polymers of carbon monoxide with one or more olefinically unsaturated compounds by contacting the monomers at elevated temperature and pressure with this catalyst, which catalyst is impregnated on a carrier with a relative bulk density (R) and average particle diameter (d, in $\mu$) such that $(d)^R < 30$.

EP 0 506 168 A1

The invention relates to novel catalyst compositions suitable for use in the preparation of polymers of carbon monoxide with one or more olefinically unsaturated compounds.

It is known that linear polymers of carbon monoxide with one or more olefinically unsaturated compounds in which polymers the units from carbon monoxide on the one hand and the units from the olefinically unsaturated compounds on the other hand are present in a substantially alternating arrangement can be prepared by contacting the monomers at elevated temperature and pressure with a catalyst suitable for this purpose.

The preparation of the polymers can be carried out as liquid phase polymerization or as gas phase polymerization. In the liquid phase polymerization the monomers are contacted with a solution of the catalyst in a non-polymerizable diluent in which the polymers are insoluble or virtually insoluble. During the polymerization the polymers are obtained in the form of a suspension in the diluent. After the required degree of polymerization has been reached, the polymerization is generally terminated by cooling the reaction mixture and releasing the pressure. The polymers are isolated from the suspension, for example by filtration or centrifuging. The pure diluent to be used for a following polymerization is recovered from the remaining liquid, e.g. by distillation. In gas phase polymerization the monomers are contacted with the catalyst substantially in the absence of a liquid non-polymerizable diluent, the catalyst being preferably deposited on a carrier by impregnation. For the preparation of the polymers on an industrial scale, gas phase polymerization is much to be preferred to liquid phase polymerization on account of the fact that with gas phase polymerization the above-mentioned filtration or centrifuging step, as well as the distillation step, can be omitted. If implemented on an industrial scale, these separation and purification steps involve considerable expense.

The applicant has carried out extensive research concerning gas phase polymerization for the preparation of the present polymers. This showed that the polymerization activity of catalyst compositions comprising a catalyst deposited on (and in) a carrier by impregnation is determined to a large extent by the average particle diameter as well as by the relative bulk density of the carrier. The relative bulk density of a carrier (hereinafter indicated by R) is understood to be the quotient of the bulk density of the carrier expressed in g/ml and 0.6x the density of the carrier, also expressed in g/ml. In comparative research with catalyst compositions having the same catalytic loading and of which the catalyst had been deposited on carriers of the same composition but differing from one another in R and average particle diameter, it appeared that the catalyst compositions often display a higher polymerization activity according as the value of the carrier index is lower. The carrier index K is understood to be the the quantity $(d)^R$ in which d represents the number of microns of the average particle diameter. It was found that for the preparation of catalyst compositions displaying a high activity in gas phase polymerization for the preparation of the present polymers, use must be made of carriers with an R and d such that they have a carrier index of less than 30. Catalyst compositions which comprise a catalyst suitable for the present purpose and impregnated on a carrier with a K <30 are novel.

The present patent application therefore relates to novel catalyst compositions, which comprise a catalyst suitable for the preparation of linear polymers of carbon monoxide with one or more olefinically unsaturated compounds in which polymers the units from carbon monoxide and the units from the olefinically unsaturated compounds are present in a substantially alternating arrangement, which preparation comprises contacting the monomers at elevated temperature and pressure with this catalyst, and a carrier onto which the catalyst is deposited, characterized in that the catalyst has been deposited by impregnation on a carrier having a relative bulk density (R) and an average particle diameter (d, expressed in $\mu$) such that $(d)^R < 30$.

The patent application further relates to the application of these novel catalyst compositions in gas phase polymerization for the preparation of polymers of carbon monoxide with one or more olefinically unsaturated compounds.

In the catalyst compositions of the invention the catalyst is preferably deposited on a carrier with a K <25. Carriers are preferred with an R of 0.05-1.0 and in particular 0.1-0.9. Carriers are further preferred with a d of 1-2000 $\mu$ and in particular 10-1000 $\mu$.

The impregnation of the carrier can take place very suitably by contacting the carrier with a solution or suspension of the catalyst in a liquid diluent and then substantially removing the diluent. As diluents, preferably alcohols and in particular methanol are used. If an alcohol is used as diluent, its removal is preferably carried out such that a small quantity remains behind in the catalyst on the carrier. If the catalyst consists of a combination of several components, the catalyst preparation can take place either by depositing all components together or by depositing each of the components separately by impregnation onto the carrier. As carrier a porous carrier is preferably chosen. Both inorganic and organic carriers are eligible as carriers for the catalyst. Examples of suitable carriers are silica, alumina, talc, charcoal, cellulose, dextrose and dextran gel. Polymers can also be used as carrier materials, e.g. polyethylene, polypropylene and polystyrene. Carrying out the gas phase polymerization with the catalyst applied to a carrier results in products in which the prepared polymer occurs together with the carrier used. Depending on the nature and quantity of the carrier, products with a very wide range of properties and applications can be prepared. If desired, the carrier can be wholly or partly removed from the product at the end of the polymerization by treating the product with a solvent in which the prepared polymer is soluble but the carrier is insoluble.

In the gas phase polymerization according to the invention, use is preferably made, as carrier for the catalyst, of a polymer that as regards structure and composition corresponds substantially with the polymer to be prepared.

The catalyst compositions of the invention comprise a catalyst which has the capability, starting from a mixture of carbon monoxide and one or more olefinically unsaturated compounds, to catalyze the formation of the previously mentioned linear alternating polymers. Suitable catalysts for the present purpose are, inter alia, those which contain a Group VIII metal. In this patent application, Group VIII metals are understood to be the noble metals ruthenium, rhodium, palladium, osmium, iridium and platinum, as well as the iron group metals iron, cobalt and nickel. Catalysts containing palladium, nickel or cobalt as Group VIII metal are preferred. Palladium is particularly preferred as Group VIII metal. If the catalysts include a Group VIII metal, its incorporation in the catalyst preferably takes place in the form of a salt of a carboxylic acid, in particular in the form of an acetate. There is preference for catalyst compositions which contain 10-100,000 and in particular 50-10,000 mg Group VIII metal per kg carrier. Besides a Group VIII metal, the catalysts preferably contain a bidentate ligand that via two phosphorus-, nitrogen- or sulphur-containing dentate groups present therein can form a complex with the Group VIII metal. If a nitrogen bidentate ligand is used, there is preference for compounds of the general formula

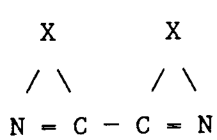

in which X represents an organic bridging group containing three or four atoms in the bridge, of which at least two are carbon atoms, such as 2,2'-dipyridyl and 1,10-phenanthroline. If a sulphur bidentate ligand is used, there is preference for compounds of the general formula $R^1S\text{-}R\text{-}SR^1$ in which $R^1$ represents an optionally polar substituted hydrocarbyl group and R represents a divalent organic bridging group containing at least two carbon atoms in the bridge, such as 1,2-bis(ethylthio)-ethane and cis-1,2-bis(benzylthio)ethene. Preferably, a phosphorus bidentate ligand of the general formula $(R^1)_2P\text{-}R\text{-}P(R^1)_2$ is used in which R and $R^1$ have the previously indicated meanings. There is further preference for the use of such phosphorus bidentate ligands in which $R^1$ represents an aromatic hydrocarbyl group having at least one alkoxy substituent at the ortho position relative to the phosphorus atom to which it is linked. If in the catalysts use is made of a nitrogen or sulphur bidentate ligand, the quantity employed is preferably 0.5-100 and in particular 1-50 mol per g.atom Group VIII metal. If a phosphorus bidentate ligand is used, the quantity employed is preferably 0.5-2 and in particular 0.75-1.5 mol per g.atom Group VIII metal. In addition to a Group VIII metal and a phosphorus, nitrogen or sulphur bidentate ligand, the catalysts preferably contain an acid component. As examples of suitable acid components, strong organic acids such as para-toluenesulphonic acid, trifluoroacetic acid and methylsulphonic acid can be mentioned. As examples of very suitable acid components, the following can also be mentioned:

a) acids having a pKa of at least 2, such as phosphoric acid, tartaric acid, citric acid and ascorbic acid, and

b) Lewis acids of the general formula $MF_n$ where M represents an element that can form a Lewis acid with fluorine, where F represents fluorine and where n has the value 3 or 5 such as boron trifluoride, aluminium trifluoride and antimony pentafluoride.

There is particular preference for Lewis acid/Brönsted acid mixtures as acid component in the catalysts. These mixtures preferably contain 0.1-10 and in particular 0.5-5 mol Brönsted acid per mol Lewis acid. Very suitable Lewis acids for application in these mixtures are fluorides such as boron trifluoride, titanium tetrafluoride, phosphorus pentafluoride and antimony pentafluoride. As Brönsted acid hydrofluoric acid is very suitable. Acid components of the present type are preferably selected from: tetrafluoroboric acid, hexafluorotitanic acid, hexafluorophosphoric acid and hexafluoroantimonic acid.

The quantity of acid component in the catalysts is preferably 0.5 to 200 and in particular 1.0 to 100 mol per g.atom Group VIII metal, with the proviso that when a Lewis acid/Brönsted acid mixture is employed, these quantities relate to the Lewis acid present in the mixture.

To raise the activity of the catalysts, an organic oxidizing agent can also be incorporated therein. Aromatic nitro compounds such as nitrobenzene

are very suitable for this purpose. The quantity of organic oxidizing agent used is preferably 5-5000 and in particular 10-1000 mol per g.atom Group VIII metal.

As olefinically unsaturated compounds which according to the invention can be polymerized with carbon monoxide, compounds are eligible which consist exclusively of carbon and hydrogen, as well as compounds which besides carbon and hydrogen also contain one or more heteroatoms. The process according to the invention is preferably used for the preparation of polymers of carbon monoxide with one or more olefinically unsaturated hydrocarbons. Examples of suitable hydrocarbon monomers are ethene, propene, butene-1, hexene-1, octene-1, styrene, cyclopentene, norbornene and dicyclopentadiene. The process according to the invention is in particular very suitable for use in the preparation of copolymers of carbon monoxide with ethene and in the preparation of terpolymers of carbon monoxide-with ethene and an α-olefin, in particular propene.

The quantity of catalyst used in the process according to the invention can vary within wide limits. Per mol olefinically unsaturated compound to be polymerized, a quantity of catalyst is preferably used which contains $10^{-7}$ to $10^{-3}$ and in particular $10^{-6}$ to $10^{-4}$ g.atom Group VIII metal.

To improve the behaviour of the catalysts, the gas phase polymerization according to the invention is preferably carried out in the presence of a small quantity of alcohol and/or hydrogen. The lower aliphatic alcohols in particular are very suitable as alcohols. There is particular preference for the use of methanol.

The polymerization is preferably carried out at a temperature of 25-150°C and a pressure of 2-150 bar and in particular at a temperature of 30-130°C and a pressure of 5-100 bar. The molar ratio of the olefinically usaturated compounds relative to carbon monoxide is preferably 10:1 to 1:10 and in particular 5:1 to 1:5. The polymer preparation according to the invention can be carried out either batchwise or continuously.

The invention is further illustrated by the following examples.

Example 1

A carbon monoxide/ethene copolymer was prepared as follows. A catalyst composition was prepared by absorbing a catalyst solution containing
1.5 ml methanol,
0.5 ml tetrahydrofuran,
0.0095 mmol palladium acetate,
0.024 mmol tetrafluoroboric acid, and
0.0104 mmol 1,3-bis[bis(2-methoxyphenyl)-phosphino]propane
on 8 g of a linear alternating carbon monoxide/ethene copolymer with a d of 900 μ and an R of 0.57 and therefore a K of 48. The catalyst composition thus prepared was introduced into a stirred autoclave with a volume of 300 ml. After the air in the autoclave had been displaced by nitrogen, the autoclave contents were brought to 85°C and a 1:1 carbon monoxide/ethene mixture was forced in until a pressure of 50 bar was reached. Finally, hydrogen was forced in until a pressure of 55 bar was reached. During the polymerization the pressure was maintained at 55 bar by forcing in a 1:1 carbon monoxide/ethene mixture. After 4 hours the polymerization was terminated by cooling the reaction mixture to room temperature and releasing the pressure. 30.3 g copolymer was obtained. The polymerization rate was 5.5 kg copolymer/(g palladium.hour).

Example 2

A carbon monoxide/ethene copolymer was prepared in substantially the same way as in example 1, but with the following differences:

a) the carrier polymer had a d of 500 μ and an R of 0.57 and therefore a K of 35, and

b) the reaction time was 10 hours instead of 4 hours.

80.1 g copolymer was obtained. The polymerization rate was 7.1 kg copolymer/(g palladium.hour).

Example 3

A carbon monoxide/ethene copolymer was prepared in substantially the same way as in example 1, but with the difference that the carrier polymer had a d of 1300 μ and an R of 0.74 and therefore a K of 202. 12.9 g copolymer was obtained. The polymerization rate was 1.2 kg copolymer/(g palladium.hour).

Example 4

A carbon monoxide/ethene copolymer was prepared in substantially the same way as in example 1, but with the difference that the carrier polymer had a d of 500 μ and an R of 0.73 and therefore a K of 93. 15.4 g copolymer was obtained. The polymerization rate was 1.8 kg copolymer/(g palladium.hour).

Example 5

A mixture of a carbon monoxide/ethene copolymer and polypropene was prepared in substantially the same way as the carbon monoxide/ethene copolymer in example 1, but with

the following differences:

a) as carrier material a polypropene was employed with a d of 500 µ and an R of 0.74 and therefore a K of 99, and

b) the reaction time was 6 hours instead of 4 hours.

8.6 g of a mixture of a carbon monoxide/ethene copolymer and polypropene was obtained. The polymerization rate of the carbon monoxide/ethene copolymer was 0.1 kg copolymer/(g palladium.hour).

Example 6

A carbon monoxide/ethene copolymer was prepared in substantially the same way as in example 1, but with the following differences:

a) the catalyst solution contained 0.19 mmol citric acid instead of tetrafluoroboric acid,

b) the carrier polymer had a d of 1000 µ and an R of 0.57 and therefore a K of 51,

c) the reaction temperature was 90 °C instead of 85 °C, and

d) the reaction time was 5 hours instead of 4 hours.

32.8 g copolymer was obtained. The polymerization rate was 4.9 kg copolymer/(g palladium.hour).

Example 7

A carbon monoxide/ethene copolymer was prepared in substantially the same way as in example 1, but with the difference that the carrier polymer had a d of 275 µ and an R of 0.56 and therefore a K of 23.

47.6 g copolymer was obtained. The polymerization rate was 9.8 kg copolymer/(g palladium.hour).

Example 8

A carbon monoxide/ethene copolymer was prepared in substantially the same way as in example 1, but with the following differences:

a) the carrier polymer had a d of 200 µ and an R of 0.53 and therefore a K of 17, and

b) the reaction time was 10 hours instead of 4 hours.

100.9 g copolymer was obtained. The polymerization rate was 9.2 kg copolymer/(g palladium.hour).

Example 9

A carbon monoxide/ethene copolymer was prepared in substantially the same way as in example 1, but with the difference that the carrier polymer had a d of 200 µ and an R of 0.40 and therefore a K of 8. 60.1 g copolymer was obtained. The polymerization rate was 12.9 kg copolymer/(g palladium.hour).

Example 10

A carbon monoxide/ethene copolymer was prepared in substantially the same way as in example 1, but with the difference that the carrier polymer had a d of 200 µ and an R of 0.36 and therefore a K of 7. 54.9 g copolymer was obtained. The polymerization rate was 11.6 kg copolymer/(g palladium.hour).

Example 11

A carbon monoxide/ethene copolymer was prepared in substantially the same way as in example 1, but with the difference that the carrier polymer had a d of 200 µ and an R of 0.14 and therefore a K of 2. 50.4 g copolymer was obtained. The polymerization rate was 10.5 kg copolymer/(g palladium.hour).

Example 12

A mixture of a carbon monoxide/ethene copolymer and polypropene was prepared in substantially the same way as the carbon monoxide/ethene copolymer in example 1, but with the difference that as carrier material a polypropene was employed with a d of 500 µ and an R of 0.51 and therefore a K of 24. 15.7 g of a mixture of a carbon monoxide/ethene copolymer and polypropene was obtained. The polymerization rate of the carbon monoxide/ethene copolymer was 1.9 kg copolymer/(g palladium.hour).

Example 13

A carbon monoxide/ethene copolymer was prepared in substantially the same way as in example 1, but with the following differences:

a) the catalyst solution contained 0.19 mmol citric acid instead of tetrafluoroboric acid,

b) the carrier polymer had a d of 200 µ and an R of 0.37 and therefore a K of 7,

c) the reaction temperature was 90 °C instead of 85 °C, and

d) the reaction time was 5 hours instead of 4 hours.

40.3 g copolymer was obtained. The polymerization rate was 6.4 kg copolymer/(g palladium.hour).

Example 14

A mixture of a carbon monoxide/ethene copolymer and silica was prepared in substantially the same way as the carbon monoxide/ethene copolymer in example 1, but with the following differences:

a) as carrier material a silica was employed with a d of 100 μ and an R of 0.2 and therefore a K of 3, and

b) the reaction time was 6.1 hours instead of 4 hours.

27.5 g of a mixture of a carbon monoxide/ethene copolymer and silica was obtained. The polymerization rate of the carbon monoxide/ethene copolymer was 3.2 kg copolymer/(g palladium.hour).

Of the examples 1-14, examples 7-14 are according to the invention. In these examples the polymerizations were carried out using catalysts impregnated on carriers with a K <30. Examples 1-6 fall outside the scope of the invention. In these the polymerizations were carried out using catalysts impregnated on carriers with a K >30.

The influence of K of the carrier material on the polymerization activity of the catalyst can be clearly seen by comparison of the results of the following examples.

In examples 1-4 and 7-11 catalysts were used which had been deposited on a linear alternating carbon monoxide/ethene copolymer as carrier and which catalysts contained tetrafluoroboric acid as acid component. In examples 1-4 (not according to the invention) the carriers had a K varying from 35 to 202 and polymerization rates were achieved varying from 1.2 to 7.1 kg copolymer/(g palladium.hour). In examples 7-11 (according to the invention) the carriers had a K varying from 2 to 23 and polymerization rates were achieved varying from 9.2 to 12.9 kg copolymer/(g palladium.hour).

In examples 5 and 12 catalysts were used which were applied to polypropene as carrier. In example 5 (not according to the invention) the carrier had a K of 99 and a polymerization rate was achieved of 0.1 kg copolymer/(g palladium.hour). In example 12 (according to the invention) the carrier had a K of 24 and a polymerization rate was achieved of 1.9 kg copolymer/(g palladium.hour).

In examples 6 and 13 catalysts were used which were applied to a linear alternating carbon monoxide/ethene copolymer as carrier and which catalysts contained citric acid as acid component. In example 6 (not according to the invention) the carrier had a K of 51 and a polymerization rate was achieved of 4.9 kg copolymer/(g palladium.hour). In example 13 (according to the invention) the carrier had a K of 7 and a polymerization rate was achieved of 6.4 kg copolymer/(g palladium.hour).

It was established by NMR analysis that the carbon monoxide/ethene copolymers prepared according to examples 1-14 were built up of linear chains in which the units from carbon monoxide on the one hand and the units from ethene on the other hand occurred in an alternating manner.

## Claims

**1.** Catalyst compositions, which comprise a catalyst suitable for the preparation of linear polymers of carbon monoxide with one or more olefinically unsaturated compounds in which polymers the units from carbon monoxide and the units from the olefinically unsaturated compounds are present in a substantially alternating arrangement, which preparation comprises contacting the monomers at elevated temperature and pressure with this catalyst, and a carrier onto which the catalyst is deposited, characterized in that the catalyst has been deposited by impregnation on a carrier having a relative bulk density (R) and an average particle diameter (d, expressed in μ) such that $(d)^R < 30$.

**2.** Catalyst compositions according to claim 1, characterized in that the catalyst is applied to a carrier with an R of from 0.05-1.0.

**3.** Catalyst compositions according to claim 1 or 2, characterized in that the catalyst is applied to a carrier with a d of from 1-2000 μ.

**4.** Catalyst compositions according to one or more of claims 1-3, characterized in that the carrier is a polymer which as regards structure and composition substantially corresponds with the polymer to be prepared.

**5.** Catalyst compositions according to one or more of claims 1-4, characterized in that the catalyst contains a Group VIII metal.

**6.** Catalyst compositions according to claim 5, characterized in that the catalyst contains in addition to a Group VIII metal a bidentate ligand that via two phosphorus-, nitrogen- or sulphur-containing dentate groups present therein can form a complex with the Group VIII metal.

**7.** Catalyst compositions according to claim 6, characterized in that the catalyst additionally contains an acid component.

**8.** Process for the preparation of polymers, characterized in that polymers of carbon monoxide with one or more olefinically unsaturated compounds are prepared by contacting the monomers at elevated temperature and pressure and substantially in the absence of a liquid non-polymerizable diluent with a catalyst composition according to one or more of claims 1-7.

**9.** Process according to claim 8, characterized in that the polymerization is carried out in the presence of a small quantity of alcohol.

**10.** Process according to claim 8 or 9, characterized in that per mol of olefinically unsaturated compound to be polymerized a quantity of catalyst is used which contains from $10^{-7}$ to $10^{-3}$ g.atom Group VIII metal, and that it is carried out at a temperature of 25-150°C, a pressure of 2-150 bar and a molar ratio of the olefinically unsaturated compounds relative to carbon monoxide of from 10:1 to 1:10.

European Patent Office

# EUROPEAN SEARCH REPORT

Application Number

EP 92200706.7

| Category | DOCUMENTS CONSIDERED TO BE RELEVANT<br>Citation of document with indication, where appropriate, of relevant passages | Relevant to claim | CLASSIFICATION OF THE APPLICATION (Int. Cl.5) |
|---|---|---|---|
| A | EP - A - 0 404 228 (SHELL INTERNATIONALE) * Claims 1,15 * -- | 1,5-8 | C 08 G 67/02 |
| A | EP - A - 0 340 844 (SHELL INTERNATIONALE) * Claim 1 * -- | 1,8 | |
| A | US - A - 4 914 183 (MAARTEN M. GEUZE et al.) * Claim 1 * -- | 1,8 | |
| A | US - A - 4 778 876 (MICHAEL J. DOYLE et al.) * Abstract * ---- | 1,8 | |

TECHNICAL FIELDS SEARCHED (Int. Cl.5)

C 08 G 67/00

The present search report has been drawn up for all claims

| Place of search | Date of completion of the search | Examiner |
|---|---|---|
| VIENNA | 03-06-1992 | REIF |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document